(19) **Europäisches Patentamt / European Patent Office / Office européen des brevets**

(11) **EP 2 947 709 B1**

(12) **EUROPEAN PATENT SPECIFICATION**

(45) Date of publication and mention of the grant of the patent:
**06.11.2019 Bulletin 2019/45**

(21) Application number: **14741020.3**

(22) Date of filing: **20.01.2014**

(51) Int Cl.:
*C25B 13/08* (2006.01)          *C25B 1/10* (2006.01)
*D06M 10/00* (2006.01)          *D06M 101/22* (2006.01)
*D06M 101/30* (2006.01)          *H01M 2/16* (2006.01)

(86) International application number:
**PCT/CN2014/070896**

(87) International publication number:
**WO 2014/111053 (24.07.2014 Gazette 2014/30)**

(54) **DIAPHRAGM CLOTH FOR WATER ELECTROLYZER AND MANUFACTURING METHOD THEREFOR**

MEMBRANTUCH FÜR EINEN WASSERELEKTROLYSEUR UND HERSTELLUNGSVERFAHREN DAFÜR

TOILE DE DIAPHRAGME POUR ÉLECTROLYSEUR À EAU ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2013   CN 201310026190**
        **08.07.2013   CN 201310284342**

(43) Date of publication of application:
**25.11.2015   Bulletin 2015/48**

(73) Proprietor: **Toray Industries, Inc.**
**Tokyo, 103-8666 (JP)**

(72) Inventors:
• **YANG, Lili**
  **Nantong**
  **Jiangsu 226009 (CN)**
• **TAKEDA, Masaaki**
  **Nantong**
  **Jiangsu 226009 (CN)**
• **ZHANG, Youjuan**
  **Nantong**
  **Jiangsu 226009 (CN)**

(74) Representative: **Mewburn Ellis LLP**
**City Tower**
**40 Basinghall Street**
**London EC2V 5DE (GB)**

(56) References cited:
**EP-A1- 0 252 604          EP-A1- 0 571 953**
**EP-A1- 0 814 897          EP-A1- 2 358 933**
**CN-A- 102 477 637        GB-A- 2 091 166**
**JP-A- 2004 285 536      US-A- 4 432 859**
**US-A- 4 539 082          US-A- 4 895 634**

• **LI, YINGNA;: 'Effects of low-temperature plasma on the graft copolymerization of PPS' SCIENCE -ENGINEERING (A), CHINA MASTER'S THESES FULL-TEXT DATABASE 16 July 2006, XP008180229**
• **PENG, FUBING ET AL.: 'Development Situation of Electrobath Membrane Used for Membrane Method Alkali Hydrogen Manufacturing' NONWOVENS vol. 16, no. 6, 31 December 2008, XP008180139**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to a kind of diaphragm cloth for a water electrolyzer and a manufacturing method therefor.

**BACKGROUND OF THE PRESENT INVENTION**

As the key material of a water electrolyzer, diaphragm cloth is disposed between an anode and a cathode of the water electrolyzer to prevent gas on the anode side from mixing with gas on the cathode side and thus to ensure the purity of gas. Diaphragm cloth has the following requirements on its properties: full wettability by electrolyte; small average pore size and high gas-tightness; large porosity; certain mechanical strength and stiffness; corrosion resisting of alkaline electrolyte, high-temperature resistance, strong chemical stability and easy industrialization.

At present, major factories of equipment for producing hydrogen by alkaline water electrolysis in China still use asbestos cloth as a diaphragm cloth. However, with the advance of industrialization and the technical progress, during the production practice, it is gradually recognized that the asbestos diaphragms exist some problems. First, due to the swelling property and chemical instability of asbestos diaphragms, pure asbestos diaphragms experience serious swelling in a specific operating environment, particularly under a high current load, so that the mechanical strength of the diaphragms is reduced and the service life thereof is shortened. Moreover, limited by the asbestos material, the temperature of the electrolyte has to be controlled below 90°C. When the temperature of the electrolyte exceeds 90°C, the corrosion to the asbestos diaphragms will be aggravated, so that the electrolyte is polluted and the service life of the asbestos diaphragms is influenced. As a result, it is very difficult to improve the efficiency of an electrolyzer by increasing the temperature of solution. In addition, the asbestos material also has the problems of source reduction, raised price, and unstable quality. Comprehensively considering the above reasons, the development and application of novel diaphragm material which can replace the asbestos diaphragms has become a very important issue in the industry. The manufacturers of equipment for producing hydrogen by water electrolysis also successively and actively explore high-performance novel diaphragm material which is energy-saving, environmentally friendly and easy for industrialization. However, due to the following problems, the so-called novel diaphragm material still can not completely replace the asbestos diaphragms currently.

Chinese patent application CN101372752A disclosed non-woven cloth made of common polyphenylene sulfide fiber, where the non-woven cloth is sulfonated with 90%-98% $H_2SO_4$ at 70-130°C for 20-40 min and then treated with 30% potassium hydroxide to finally obtain a high-temperature-resistant diaphragm for an alkaline water electrolyzer. In that invention, as the non-woven cloth has a relatively high liquid absorption rate, the non-woven cloth, after being treated by strong acid, needs to consume a large amount of valuable water resource and chemicals during a cleaning process and takes a long time for cleaning, and the technological operation is complicated and easily to pollute the environment. Meanwhile, such non-woven cloth is low in safety and not suitable for industrial production.

In addition, Chinese patent application CN101195944A disclosed asbestos-free, environmental and energy-saving diaphragm cloth which is woven fabric made of one or more of poly(ether-ether-ketone) fiber, polyphenylene sulfide fiber and polypropylene fiber. Although the gas-tightness of this diaphragm cloth fulfills the standard requirements of an asbestos diaphragm, the hydrophilicity of the obtained diaphragm cloth is poor because the mentioned chemical fiber has poor water absorption, and thus is unable to actually fulfill the use requirements.

EP-A-0814,897 concerns an ultra thin composite membrane comprising an expanded PTFE membrane having a porous microstructure of polymeric fibrils. The composite membrane is impregnated throughout with an ion exchange material. This expanded PTFE membrane has an average pore size between 0.05 and 0.4 micrometers.

GB-A-2091166 concerns an ion exchange membrane which contains a microporous PTFE sheet which has open-cell porosity, preferably of 3 to 15 microns.

EP-A-0252604 discloses a woven diaphragm for use in an electrolytic or in an electrochemical cell. The diaphragm is woven with yarns made from synthetic hydrophobic staple fibers which have a linear density of about 3dtex.

US-A-4359082 relates to a woven diaphragm for aqueous electrolytes comprising twist-free or low-twist weft threads which impart capillarity to the diaphragm.

EP-A-0571953 discloses a porous fiber street having nominal pore sizes from $1\mu$m to $200\mu$m and a porosity of from 30% to 80%. The surface of fibers is rendered hydrophilic by subjecting it to a low-temperature plasma treatment.

WO2010/080127A concerns PTFE fabric and laminate structures. The fabric comprises a plurality of PTFE fibers overlapping at intersections, at least some of which intersections have PTFE masses which lock the overlapping fibers together.

## SUMMARY OF THE PRESENT INVENTION

An object of the present invention is to provide a diaphragm cloth for a water electrolyzer with high gas-tightness and excellent ion permeability.

Another object of the present invention is to provide a manufacturing method of a diaphragm cloth for a water electrolyzer with simple process, saved energy and no environmental pollution.

To achieve the above objects, the present invention provides a diaphragm cloth for a water electrolyzer, wherein the diaphragm cloth is a plain cloth or knitted fabric composed of alkali-resistant fiber at a common use temperature of no less than 150°C; the average pore size of the diaphragm cloth is no less than 3 $\mu$m and smaller than 10$\mu$m; and under the condition of a pressure at 3 kPa at 23°C and 50% RH, the venting quality of the diaphragm cloth is 2L/cm$^2$/min or less; and the common use temperature is a temperature at which the strength of the fiber is reduced by half after exposure for 100,000 hours; wherein said alkali-resistant fiber is polyphenylene sulfide fiber containing hydrophilic groups on its surface, and wherein pores with a pore size of 0.2-10$\mu$m in the diaphragm cloth take up no less than 60% of all pores, and the content of oxygen element on the fiber surface is 12-40 wt%; and wherein the cover factor of the diaphragm cloth is from 2300 to 3000 if it is a plain cloth and from 0.7 to 1.5 if it is a knitted fabric.

If the average pore size and the venting quality of the diaphragm cloth are controlled within the above ranges, high gas-tightness of the diaphragm for a water electrolyzer can be ensured. In this way, gas molecules and bubbles are difficult to pass through. As a result, gas on the anode side can be prevented from mixing with gas on the cathode side, the purity of gas and good safety are ensured. From the perspective of ensuring the separator fabric to stably have high gas-tightness for a long term, preferably, the average pore size of the diaphragm cloth is less than 5$\mu$m and the venting quality is 1.5L/cm$^2$/min or less.

In the present invention, to ensure the diaphragm cloth of the present invention to have high gas-tightness and to improve the generation efficiency of gas and the purity of the generated gas, the average pore size is kept within a certain range and the weaving conditions are optimized to improve the uniformity of the pore size. In other words, in the present invention, the average pore size is less than 10$\mu$m, and pores with a pore size of 0.2-10$\mu$m in the diaphragm cloth take up no less than 60% of all pores; preferably, pores with a pore size of 0.2-10$\mu$m in the diaphragm cloth take up no less than 80% of all pores; and particularly preferably, the average pore size is less than 5$\mu$m, and pores with a pore size of 0.2-5$\mu$m in the diaphragm cloth take up above 60% of all pores.

The diaphragm cloth for a water electrolyzer of the present invention is formed from high-temperature-resistant and alkali-resistant fiber at a common use temperature of no less than 150°C which is polyphenylene sulfide (PPS) fiber. Other high temperature-resistant and alkali-resistant fibers at a common use temperature of no less than 150°C include polytetrafluoroethylene (PTFE) fiber, poly(p-phenylene benzobisoxazole) (PBO) fiber and poly(ether-ether-ketone) (PEEK) fiber. Considering the requirement of use performance, cost and hydrophilic processability, the polyphenylene sulfide (PPS) fiber isused.

In addition, the cover factor of the fabric is a parameter which characterized the tightness of fabric. The higher the cover factor is, the tighter the fabric is, and the smaller the venting quality and pore size are. The weave of a woven fabric may be, for example, plain weave, twill weave, satin weave, derivative weave and multiple weave thereof, where the plain cloth has the most weaving points and the largest tightness. From the perspective of better fulfilling the gas-tightness requirement of the diaphragm cloth, the plain cloth is used when a woven fabric is chosen in the present invention. When the diaphragm cloth is plain cloth, the cover factor ranges from 2300 to 3000, preferably from 2500 to 2900. If the cover factor of the plain cloth is less than 2300, the gas-tightness of the fabric is low due to insufficient tightness of the fabric, thus the diaphragm cloth is difficult to prevent gas on the cathode side and gas on the anode side from passing through, and both the purity of gas and the safety thus can not be ensured. On the other hand, if the cover factor of the plain cloth is more than 3000, the higher requirements are proposed for a weaving machine and the weaving is difficult. When the diaphragm cloth is of multiple weave, for example, weft-backed, weft-tripled or multi-layer fabric, the density of warps or wefts can be further improved under limited conditions of weaving tightness, thereby reducing the venting quality of the fabric and improving the gas-tightness. When the diaphragm cloth of the present invention is knitted fabric, the cover factor of the knitted fabric is 0.7 to 1.5.

When in practical operation, if the diaphragm cloth for a water electrolyzer can remain airtight for 2 min at a pressure of no less than 200 mm H$_2$O (2kPa), the use requirement of gas-tightness of the diaphragm cloth for a water electrolyzer can be basically fulfilled. From the perspective of ensuring the diaphragm cloth to have excellent gas-tightness, ion permeability and diaphragm cloth processability, the diaphragm cloth for a water electrolyzer of the present invention preferably has gas-tightness remaining for 2min at a pressure of 250-450mmH$_2$O (2.5-4.5kPa). If the gas-tightness is less than 250mmH$_2$O (2.5kPa), the basic requirement on the diaphragm can not be fulfilled, and the purity of the generated gas will be influenced. On the other hand, if the gas-tightness is more than 450mmH$_2$O (4.5kPa), it is likely to result in difficult weaving and high cost; furthermore, the resistance of the separator will be increased and the energy consumption for a unit of gas generation is thus increased.

The diaphragm cloth for a water electrolyzer of the present invention has high stiffness. During the mounting of the diaphragm, the high stiffness can make the separator difficultly wrinkled during the cutting and mounting process, so it is easier, more convenient and more efficient to mount. Meanwhile, a size deviation caused in the cutting process and a thickness deviation caused by wrinkling in the mounting process of the diaphragm can be reduced, thus the uniformity of the diaphragm in use is improved. In addition, during the operating of an electrolyzer, electrolyte flows in a space between a polar plate and a diaphragm, and the high stiffness of the diaphragm can make the diaphragm cloth generate a smaller deformation when the diaphragm cloth suffering from pressure or other external acting force, so that the diaphragm cloth has a smaller influence on the gas-tightness of the diaphragm, electrolysis and voltage, and the stability of the system operation can be thus ensured. In the present invention, the stiffness of the diaphragm cloth in both warp and weft directions is no less than 3 N, preferably no less than 5N.

To improve both the ion permeability and working efficiency of the diaphragm and to achieve the purpose of saving energy and reducing consumption, the inventor(s) further conducts studies from the perspective of improving the hydrophilicity of the diaphragm. Specifically, in the diaphragm cloth for a water electrolyzer of the present invention, the high-temperature-resistant and alkali-resistant fiber at a common use temperature of no less than 150°C contains hydrophilic groups on its surface, and the content of oxygen element on the fiber surface is 12wt% or more and 40 wt% or less. If the content of oxygen element on the fiber surface is less than 12wt%, the improvement of the hydrophilicity of the diaphragm cloth is low, and the diaphragm cloth cannot be completely wetted by the electrolyte, resulting in poor ion permeability, large resistance of the diaphragm cloth, low electrolysis efficiency and large energy loss. Considering the balance between the hydrophilicity of the diaphragm cloth and the processing cost, the content of oxygen element on the fiber surface is 15-40wt%, preferably within 15-30wt%.

The type of hydrophilic groups and chemical bonds contained on the surface of the high-temperature-resistant and alkali-resistant fiber at a common use temperature of no less than 150°C is related to a processing method and the type of processing gas. The hydrophilic groups are at least one of carboxyl groups (COOH), carbonyl groups (C=O), hydroxyl groups (-OH), formyl groups (CHO) or $-SO_x$. Preferably, the hydrophilic groups are at least one of carboxyl groups (COOH), carbonyl groups (C=O), hydroxyl groups (-OH) or formyl groups (CHO), and the total content of the hydrophilic groups takes up 10-60% of the total content (mol number) of the groups on the fabric surface. Considering the balance between the hydrophilicity of the diaphragm and the processing cost, more preferably, the total content of the hydrophilic groups takes up 20-50% of the total content (mol number) of the groups on the fabric surface.

When the diaphragm cloth for a water electrolyzer of the present invention is composed of polyphenylene sulfide fiber, no less than 20wt% of the polyphenylene sulfide fiber is modified cross-section polyphenylene sulfide fiber. As its specific surface area larger than that of a circular cross-section, the modified cross-section polyphenylene sulfide fiber may improve the water absorption and water conductivity of the fabric by wicking. If the content of the modified cross-section polyphenylene sulfide fiber is less than 20wt%, the specific surface area of fiber in yarns will be reduced, so that the improvement of the water absorption and water conductivity of the prepared diaphragm cloth is not significant, the hydrophilicity of the diaphragm cloth is poor, the ion permeability and the effect of energy saving are influenced.

In the diaphragm cloth for a water electrolyzer of the present invention, the modified cross-section polyphenylene sulfide fiber may be crossed, latticed, polygonal, leaf-shaped, elliptic or flat cross-section polyphenylene sulfide fiber. From the perspective of preparing diaphragm cloth with excellent hydrophilicity, the modified cross-section polyphenylene sulfide fiber is preferably crossed or polygonal cross-section polyphenylene sulfide fiber. Among the polygonal cross-section polyphenylene sulfide fiber, hexagonal cross-section polyphenylene sulfide fiber is preferred.

In the diaphragm cloth for a water electrolyzer of the present invention, the knitted fabric may be warp-knitted fabric. The warp-knitted fabric is obtained from weaving polyphenylene sulfide yarns or filaments by warp knitting equipment via warp knitting processes. The number of yarns forming the warp-knitted fabric is brought to be lower than that of yarns forming the woven fabric, and the yarns are arranged in a same direction, so that the water absorption and water conductivity of the diaphragm cloth may be improved. In addition, the warp-knitted fabric itself has a feature of shrinkage, and due to the shrinkage of the warp-knitted fabric, the diaphragm cloth may be allowed to have high density and high gas-tightness.

In the present invention, the fabric for the diaphragm cloth for a water electrolyzer is subjected to hydrophilic treatment, so that the water absorption of the diaphragm cloth for a water electrolyzer of the present invention may be improved by no less than 15%, compared with the fabric before treatment. If the improvement rate of the water absorption is less than 15%, the improvement effect of the hydrophilicity is poor. Considering the balance between the hydrophilicity and the processability of the diaphragm cloth, the improvement rate of the water absorption is preferably 15-200%, more preferably 20-100%.

The present invention further includes a manufacturing method of the diaphragm cloth for a water electrolyzer. In the manufacturing method, high-temperature-resistant and alkali-resistant fiber at a common use temperature of no less than 150 °C are woven or knitted to obtain high-temperature-resistant and alkali-resistant woven fabric or knitted fabric, the woven fabric or knitted fabric are refined and dried after weaving, and then the surface of the obtained woven fabric or knitted fabric is subjected to discharge modification by plasma treatment, at a treatment intensity of 50-500 $kW \cdot s/m^2$, or electric ironing treatment to obtain the finished product.

The discharge modification increases the number of hydrophilic groups on the surface of fabric by a physical processing method and thus to further improve the hydrophilicity of the diaphragm cloth. Compared with a method for subjecting fabric to hydrophilic treatment with a hydrophilic chemical reagent, this method will not bring any burden to the environment and can generate durability which ordinarily will not be generated by the hydrophilic chemical reagent in the alkaline environment, and the hydrophilicity may be remained after long-term use in the alkaline environment.

The discharge modification is plasma treatment or electric ironing treatment, preferably plasma treatment. After the fabric is subjected to plasma treatment, the fiber surface of the fabric is etched so that the surface area is increased; and on the other hand, active groups are generated on the fiber surface so that graft copolymerization of hydrophilic monomers on the material surface is caused. Accordingly, when applied in a water electrolyzer, the fabric is easily wet by the electrolyte so that the hydrophilicity of the diaphragm cloth is improved.

The plasma treatment is preferably vacuum plasma surface treatment or atmospheric pressure plasma surface treatment. When the vacuum plasma surface treatment is employed, a gas (process gas) for forming plasma may be oxygen or argon, or a gas mixture of oxygen and argon, or may be carbon dioxide or air. Generally, the pressure of the used vacuum chamber is 5-100Pa, and the treatment intensity is 50-500 kW·s/m$^2$. When the treatment gas is oxygen, after plasma surface treatment, oxygen-containing polar groups can be formed on the fiber surface, thus the diaphragm cloth has excellent hydrophilicity. When the process gas is argon, as argon is an inert gas with high molecular energy and is easy to be ionized, the fiber on the surface of the fabric is easily to be activated to form polar groups fully. When the process gas is a gas mixture of oxygen and argon, under the combined action of oxygen and argon, the fiber on the surface of the plasma-ionized fabric is activated first, to be grafted more easily when meeting oxygen component. To increase the number of formed hydrophilic groups and prolong the duration of their effects, the process gas is preferably a gas mixture of oxygen and argon. In addition, as air contains oxygen, nitrogen and carbon dioxide, when air is used as the process gas, the plasma-treated fabric can also achieve excellent hydrophilicity.

When the vacuum plasma surface treatment is employed, the pressure in the used vacuum chamber is generally 5-100Pa. Considering treatment effect and energy consumption, the pressure is preferably 30-70 Pa. The treatment intensity is 50-500 kW·s/m$^2$, preferably 80-300 kW·s/m$^2$. The treatment intensity is calculated by the following formula:

$$\text{treatment intensity} = \text{discharge power (kW)} \times \text{treatment duration (s)}/\text{treatment area (m}^2\text{)},$$

or

$$\text{treatment intensity} = \text{discharge power (kW)}/\text{treatment rate (m/s)}/\text{treatment breadth (m)}.$$

If the treatment intensity is less than 50 kW·s/m$^2$, the energy of the charged particles of the plasma is low, thus lead to a weak cross-linking action on the fiber surface and very few of hydrophilic groups generated on the fiber surface, so the finally formed diaphragm cloth is uneasily to be fully wetted by electrolyte. If the treatment intensity is more than 500 kW·s/m$^2$, the treatment effect has become stable when the treatment intensity reaches about 500 kW·s/m$^2$, so that further increasing the treatment intensity will increase the energy consumption rather than improving the treatment effect. From the perspective of allowing the number of hydrophilic groups on the fiber surface to be saturated and avoiding waste of energy, the treatment intensity is preferably 80-300 kW·s/m$^2$. In this case, the energy of the charged particles is increased, and the cross-linking action can play a full role.

When the atmospheric pressure plasma surface treatment is employed and air is used as the process gas, the treatment intensity is generally set as 50-500 kW·s/m$^2$. The treatment intensity is calculated by the following formula:

$$\text{treatment intensity} = \text{discharge power (kW)}/\text{treatment rate (m/s)}/\text{treatment breadth (m)}.$$

If the treatment intensity is less than 50 kW·s/m$^2$, the energy of the charged particles of the plasma is low , thus lead to a weak cross-linking action on the fiber surface and very few of hydrophilic groups generated on the fiber surface, so the finally formed diaphragm cloth is uneasily to be fully wetted by electrolyte. If the treatment intensity is more than 500 kW·s/m$^2$, the treatment effect has become stable when the treatment intensity reaches about 500 kW·s/m$^2$, so that

further increasing the treatment intensity will increase the energy consumption rather than improving the treatment effect. From the perspective of allowing the number of hydrophilic groups on the fiber surface to be saturated and avoiding waste of energy, the treatment intensity is preferably 80-300 kW·s/m$^2$. In this case, the energy of the charged particles is increased, and the cross-linking action can play a full role.

In addition, during or after the plasma treatment, the fabric surface can be subjected to graft modification with a graft modification chemical reagent. For example, the fabric surface can be grafted with carboxyl groups, acrylic groups, sulfonic groups or the like.

The diaphragm cloth for a water electrolyzer of the present invention has the features of high gas-tightness and excellent ion permeability, also has low cost, safety, environmental friendliness and light weight; and the manufacturing method is rapid, high efficiency, no pollution, simple operation and energy saving.

In the present invention, the alkali resistance, the common use temperature, the hydrophilic groups and the total content (mol number) of the hydrophilic groups are defined as follows.

Alkali resistance: the strength of fiber is still kept no less than 95% of the original strength after the fiber is treated in 10% NaOH at 93°C for 7 days.

Common use temperature: a temperature at which the strength is to be reduced by half after exposure for one hundred thousand hours. The common use temperature is calculated by Arrhenius equation.

Hydrophilic groups: atomic groups which are weakly bonded with water molecules by bonding with hydrogen atoms.

The percentage of the total content of hydrophilic groups in the total content (mol number) of groups on the fabric surface: chemical components on the fiber surface are analyzed qualitatively and quantitatively by an X-ray photoelectron spectroscopy (XPS), then peak separation analysis is performed to Peak C, and the type and mol concentration content of groups are judged according to the result of peak separation, where oxygen-containing polar groups are hydrophilic groups, and the sum of mol concentration percentages of the hydrophilic groups is the percentage of the total content of hydrophilic groups in the total content of groups on the fabric surface.

## DETAILED DESCRIPTION OF THE PRESENT INVENTION

The present invention will be further described by the following examples. However, the protection scope of the present invention is not limited thereto.

In the examples, the physical properties of the fiber are measured by the following methods or calculated by the following formulae.

[Cover factor]

(1) The cover factor of woven fabric is calculated by the following formula:

$$CF = N_w \times \sqrt{D_w} + N_f \times \sqrt{D_f} \, ,$$

Wherein, $N_w$ denotes the warp density of the fabric (yarns/inch);
$D_w$ denotes the fineness of warp filaments in the fabric (dtex);
$N_f$ denotes the weft density of the fabric (yarns/inch);
$D_f$ denotes the fineness of weft filaments in the fabric (dtex).

(2) The cover factor of knitted fabric is calculated by the following formula:
the cover factor of knitted fabric is also referred to as a tightness factor, which is a ratio of the square root of a TEX of yarns and a stitch length (L), i.e., a K value, where the K value =

$$K \text{ value} = \sqrt{Tex}/L .$$

[Average pore size]

According to the ASTMF316-03 standard, the pore size of fabric is measured by a capillary flowing porosimeter (a product from PMI; Model: CFP-1100-AE), and the working mode is set as a wet-up/dry-down mode. The test environment is 20±2°C and 65±4%RH. A fabric sample is placed into a sample chamber and then wetted with silwick silicone fluid with a surface tension of 19.1 dynes/cm. The bottom clamp of the sample chamber has a porous metal disc insert with a diameter of 2.54 cm and a thickness of 3.175 mm, while the top clamp of the sample chamber has a hole with a diameter of 3.175 mm, thus the value of the average pore size of the fabric can be directly read. An average value of two times of measurement is used as the final average pore size value.

The distribution condition of pore size and the ratio of each pore size range can be directly read from the specific measurement results, and the pore size ratio within a certain range can be obtained by adding the measured values shown in the measurement results.

[Venting quality]

The venting quality is measured by a high-pressure air permeability tester (a product from Technoworld; Model: WI70848) at 23°C and 50% RH. The specific measurement methods are as follows: 17 circular samples each with a diameter of 10 cm are stretched in a breadth direction of the fabric, the venting quality of each sample is measured at 3 kPa and an average value of 13 intermediate data is used as a final test result.

[Gas-tightness]

The gas-tightness is measured in accordance with the Term 4.5.2 "Gas-tightness Measurement" of "Asbestos Diaphragm Cloth" of the Chinese building material industry standard JC/T211-2009.

[Water absorption]

The water absorption of diaphragm cloth before or after hydrophilic treatment is measured in accordance with GB/T21655.1-2008.

[Water absorption rate]

The water absorption rate is measured in accordance with the Term 7.1.1 "Falling-drop Method" of JIS L1907-2010 "Water Absorption Test Method of a Fiber Product".

[Stiffness]

The stiffness is measured by a fabric stiffness tester (SASD-672-1) (J.A.KING & COMPANY) in accordance with the ASTM D4032 stiffness test standard. The specific method is as follows: warp and weft samples are prepared, and then tested on a stiffness tester after the pressure is regulated to 324 KPa. The test environment is $20\pm2$°C and $65\pm4$%RH, and the humidification to the samples is performed for above 24 hours.

Requirements on sampling:

Warp: length * width=8 inch (204 mm) * 4 inch (102 mm)
Weft: length * width=4 inch (102 mm) * 8 inch (204 mm)

[Hydrophilic group components and content of oxygen element therein]

Chemical components on the fiber surface are analyzed qualitatively and quantitatively by an X-ray photoelectron spectroscopy ("KRATOS" that is produced by SHIMAZU Co. Ltd., ; Model: AXIS ULTRA HAS). The content of oxygen element on the fiber surface is calculated according to the X-ray photoelectron energy spectrum. The bonding capacity of each carbon/oxygen peak can be apparently recognized according to the X-ray photoelectron energy spectrum, thus the hydrophilic group components are determined.

Example 1

Warps and wefts are both woven with 20s/6 polyphenylene sulfide yarns to obtain plain cloth with a warp density of 1.54 yarns/mm (39 yarns/inch) and a weft density of 1.06 yarns/mm (27 yarns/inch). After weaving, the plain cloth is refined and dried, and then the surface of the polyphenylene sulfide plain cloth is subjected to vacuum plasma treatment, where the pressure in a vacuum chamber is 50 Pa, the process gas is a gas mixture of oxygen and argon, and the treatment intensity is 150 kW·s/m². Finally, diaphragm cloth for a water electrolyzer with a cover factor of 2777.89 and an average pore size of 3 $\mu$m is obtained, and wherein pores with a pore size of 0.2-10 $\mu$m take up 90% of all pores, and the breaking strength of the diaphragm cloth is 4008 N/5cm and 3218 N/5cm in warp and weft directions, respectively.

The prepared diaphragm cloth is tested by an X-ray photoelectron spectroscopy. It is measured that the polyphenylene sulfide fiber surface of the diaphragm cloth contains oxygen-containing hydrophilic groups, and the content of oxygen element is 25 wt%. The oxygen-containing hydrophilic groups include carbonyl groups (C=O) and hydroxyl groups (-OH), and the total content of the oxygen-containing hydrophilic groups takes up 48% of the total content of groups on the fabric surface. The physical properties of the separator diaphragm cloth for a water electrolyzer in Example 1 are shown in Table 1.

Example 2

Warps and wefts are both woven with 20s/4 polyphenylene sulfide yarns to obtain plain cloth with a warp density of 1.85 yarns/mm (47 yarns/inch) and a weft density of 1.26 yarns/mm (32 yarns/inch). After weaving, the plain cloth is refined and dried, and then the surface of the polyphenylene sulfide plain cloth is subjected to atmospheric pressure plasma surface treatment, where the process gas is air, and the treatment intensity is 150 kW·s/m². Finally, diaphragm cloth for a water electrolyzer with a cover factor of 2705.82 and an average pore size of 4 $\mu$m is obtained, and wherein pores with a pore size of 0.2-10 $\mu$m take up 85% of all pores, and the breaking strength of the diaphragm cloth is 2247 N/5cm and 2110 N/5cm in warp and weft directions, respectively.
The prepared diaphragm cloth is tested by an X-ray photoelectron spectroscopy. It is measured that the polyphenylene sulfide fiber surface of the diaphragm cloth contains oxygen-containing hydrophilic groups, and the content of oxygen element is 30 wt%. The oxygen-containing hydrophilic groups include carbonyl groups (C=O), hydroxyl groups (-OH) and formyl groups (CHO), and the total content of the oxygen-containing hydrophilic groups takes up 45% of the total content of surface groups of the fabric. The physical properties of the diaphragm cloth for a water electrolyzer in Example 2 are shown in Table 1.

Example 3

Crossed cross-section polyphenylene sulfide fiber is mixed with circular cross-section polyphenylene sulfide fiber at a proportion by weight of 20: 80, and then 15s/4 polyphenylene sulfide yarns are obtained by a spinning process. Then, the obtained polyphenylene sulfide yarns are used as warps and wefts for weaving to form plain cloth with a warp density of 1.54 yarns/ mm (39 yarns/inch) and a weft density of 1.1 yarns/mm (28 yarns/inch). After weaving, the polyphenylene sulfide plain cloth is refined and dried, and then the surface of the plain cloth is subjected to atmospheric pressure plasma surface treatment, where the process gas is air, and the treatment intensity is 130 kW·s/m². Finally, diaphragm cloth for a water electrolyzer with a cover factor of 2658.70 and an average pore size of 5 $\mu$m is obtained, wherein pores with a pore size of 0.2-10 $\mu$m take up 80% of all pores, and the breaking strength of the diaphragm cloth is 2600 N/5cm and 2216 N/5cm in warp and weft directions, respectively.
The prepared diaphragm cloth is tested by an X-ray photoelectron spectroscopy. It is measured that the polyphenylene sulfide fiber surface of the diaphragm cloth contains oxygen-containing hydrophilic groups, and the content of oxygen element is 20 wt%. The oxygen-containing hydrophilic groups include carbonyl groups (C=O), hydroxyl groups (-OH) and formyl groups (CHO), and the total content of the oxygen-containing hydrophilic groups takes up 43% of the total content of groups on the fabric surface. The physical properties of the diaphragm cloth for a water electrolyzer in Example 3 are shown in Table 1.

Reference Example 4

Hexagonal cross-section polyphenylene sulfide fiber is mixed with circular cross-section polyphenylene sulfide fiber at a proportion by weight of 50:50, to obtain 220dtex polyphenylene sulfide fiber-mixed filaments. The obtained filaments are warp-knitted to form knitted fabric with a longitudinal density of 3.5 rows/mm (89 rows/inch) and a transverse density of 2.48 columns/mm (63 columns/inch). After weaving, the polyphenylene sulfide knitted fabric is refined and dried, and then the surface of the fabric is subjected to vacuum plasma treatment, where the pressure in a vacuum chamber is 50 Pa, the process gas is a gas mixture of oxygen and argon, and the treatment intensity is 150 kW·s/m². Finally, diaphragm cloth for a water electrolyzer with a cover factor of 1.3 and an average pore size of 7 $\mu$m is obtained, wherein pores with a pore size of 0.2-10 $\mu$m take up 60% of all pores, and the breaking strength of the diaphragm cloth is 2347 N/5cm and 1540 N/5cm in warp and weft directions, respectively.
The prepared diaphragm cloth is tested by an X-ray photoelectron spectroscopy. It is measured that the polyphenylene sulfide fiber surface of the diaphragm cloth contains oxygen-containing hydrophilic groups, and the content of oxygen element is 11 wt%. The oxygen-containing hydrophilic groups include carbonyl groups (C=O) and hydroxyl groups (-OH), and the total content of the oxygen-containing hydrophilic groups takes up 21% of the total content of groups on the fabric surface. The physical properties of the diaphragm cloth for a water electrolyzer in Example 4 are shown in Table 1.

Example 5

Hexagonal cross-section polyphenylene sulfide fiber is mixed with circular cross-section polyphenylene sulfide fiber at a proportion by weight of 80: 20, and then 20s/6 polyphenylene sulfide yarns are obtained by a spinning process. Then, the obtained yarns are used as warps and wefts for weaving to form 3/3 twill-woven fabric with a warp density of 2.2 yarns/ mm (56 yarns/inch) and a weft density of 1.57 yarns/mm (40 yarns/inch). After weaving, the 3/3 twill-woven fabric is refined and dried, and then the surface of the fabric is subjected to vacuum plasma treatment, where the pressure in a vacuum chamber is 50 Pa, the process gas is air, and the treatment intensity is 100 kW·s/m$^2$. Finally, diaphragm cloth for a water electrolyzer with an average pore size of 8 $\mu$m is obtained, wherein pores with a pore size of 0.2-10 $\mu$m take up 70% of all pores, and the breaking strength of the diaphragm cloth is 4980 N/5cm and 3600 N/5cm in warp and weft directions, respectively.

The prepared diaphragm cloth is tested by an X-ray photoelectron spectroscopy. It is measured that the polyphenylene sulfide fiber surface of the diaphragm cloth contains oxygen-containing hydrophilic groups, and the content of oxygen element is 26 wt%. The oxygen-containing hydrophilic groups include carbonyl groups (C=O) and hydroxyl groups (-OH), and the total content of the oxygen-containing hydrophilic groups takes up 40% of the total content of surface groups of the fabric. The physical properties of the diaphragm cloth for a water electrolyzer in Example 5 are shown in Table 1.

Reference Example 6

Warps and wefts are both woven with 440dtex-60f polytetrafluoroethylene filaments to obtain plain cloth with a warp density of 2.99 yarns/mm (76 yarns/inch) and a weft density of 2.44 yarns/mm (62 yarns/ inch). After weaving, the plain cloth is refined and dried, and then the surface of the plain cloth is subjected to vacuum plasma treatment, where the pressure in a vacuum chamber is 50 Pa, the process gas is a gas mixture of oxygen and argon, and the treatment intensity is 200 kW·s/m$^2$. Finally, diaphragm cloth for a water electrolyzer with a cover factor of 2895 and an average pore size of 5 $\mu$m is obtained, wherein pores with a pore size of 0.2-10 $\mu$m take up 75% of all pores, and the breaking strength of the diaphragm cloth is 4008 N/5cm and 3218 N/5cm in warp and weft directions, respectively.

The prepared diaphragm cloth is tested by an X-ray photoelectron spectroscopy. It is measured that the polytetrafluoroethylene fiber surface of the diaphragm cloth contains oxygen-containing hydrophilic groups, and the content of oxygen element is 20 wt%. The oxygen-containing hydrophilic groups include carbonyl groups (C=O) and hydroxyl groups (-OH), and the total content of the oxygen-containing hydrophilic groups takes up 38% of the total content of surface groups of the fabric. The physical properties of the diaphragm cloth for a water electrolyzer in Example 6 are shown in Table 1.

Reference Example 7

Stretched polyphenylene sulfide fiber ("TORCON ®" from TORAY; Specification: S301) with a fineness of 1.0 dtex (10 $\mu$m in diameter) and a cutting length of 6 mm and non-stretched polyphenylene sulfide fiber ("TORCON ®" from TORAY; Specification: S111) with a fineness of 3.0 dtex (17 $\mu$m in diameter) and a cutting length of 6 mm are dispersed in water at a proportion by weight of 60: 40 to form papermaking dispersion. A 140-mesh papermaking net for handmade paper is provided on the bottom, and the dispersion is fed at a rate of 80 g/m$^2$ by a small paper machine (from KUMAGAI RIKI KOGYO Co., Ltd.) with a size of 25 cm×25 cm and a height of 40 cm. Then, water is added into the dispersion to make the total amount of the dispersion to be 20 L, and the dispersion is fully stirred by a stirrer. Water in the small paper machine is drained, and the residual wet-laid paper on the papermaking net is transferred to a piece of filter paper. The described wet-laid paper and the filter paper are put into a rotary dryer (ROTARY DRYER DR-200 from KUMAGAI RIKI KOGYO Co., Ltd.) together for drying (a temperature of 100°C, a rate of 0.5 m/min, a length of 1.25 m and a duration of 2.5 min) for one time to obtain wet-laid non-woven cloth of polyphenylene sulfide fiber. At this moment, one side in contact with a roll of the dryer is used as surface (front side), and another side not in contact with the roll of the dryer is used as an inner side. Calendering is performed under a steel roll temperature of 200°C, a line pressure of 490 N/cm and a roller rotation speed of 5 m/min by a hydraulic three-roll calender (from Ligun Company; Model: IH type H3RCM) consisting of a steel roll and a paper roll. The surface (front side) of the wet-laid non-woven cloth of polyphenylene sulfide fiber is brought into contact with the steel roll and then heated and pressurized to obtain single-side pressed non-woven cloth. Then, the inner side of the wet-laid non-woven cloth is brought into contact with the steel roll and then heated and pressurized to obtain double-side pressed non-woven cloth. Then, the surface of the double-side pressed non-woven cloth is subjected to vacuum plasma treatment, where the pressure in a vacuum chamber is 50 Pa, the process gas is a gas mixture of oxygen and argon, and the treatment intensity is 150 kW·s/m$^2$. Finally, diaphragm cloth for a water electrolyzer with a volume density of 0.94 and an average pore size of 8 $\mu$m is obtained, wherein pores with a pore size of 0.2-10 $\mu$m take up 80% of all pores, and the breaking strength of the diaphragm cloth is 151 N/5cm and 143 N/5cm in warp and weft directions, respectively.

The prepared diaphragm cloth is tested by an X-ray photoelectron spectroscopy. It is measured that the polytetrafluoroethylene fiber surface of the diaphragm cloth contains oxygen-containing hydrophilic groups, and the content of oxygen element is 25 wt%. The oxygen-containing hydrophilic groups include carbonyl groups (C=O) and hydroxyl groups (-OH), and the total content of the oxygen-containing hydrophilic groups takes up 48% of the total content of surface groups of the fabric. The physical properties of the diaphragm cloth for a water electrolyzer in Reference Example 7 are shown in Table 1.

Reference Example 8

Stretched polyphenylene sulfide fiber ("TORCON ®" from TORAY; Specification: S301) with a fineness of 1.0 dtex (10 $\mu$m in diameter) and a cutting length of 6 mm and non-stretched polyphenylene sulfide fiber ("TORCON ®" from TORAY; Specification: S111) with a fineness of 3.0 dtex (17 $\mu$m in diameter) and a cutting length of 6 mm are dispersed in water at a proportion by weight of 60: 40 to form papermaking dispersion. A 140-mesh papermaking net for handmade paper is provided on the bottom, and the dispersion is fed at a rate of 100 g/m$^2$ by a small paper machine (from KUMAGAI RIKI KOGYO Co., Ltd.) with a size of 25 cm×25 cm and a height of 40 cm. The other processing conditions are the same as Embodiment 7. Finally, diaphragm cloth for a water electrolyzer with a volume density of 0.96 and an average pore size of 4 $\mu$m is obtained, wherein pores with a pore size of 0.2-10 $\mu$m take up 90% of all pores, and the breaking strength of the diaphragm cloth is 204 N/5cm and 198 N/5cm in warp and weft directions, respectively.

The prepared diaphragm cloth is tested by an X-ray photoelectron spectroscopy. It is measured that the polytetrafluoroethylene fiber surface of the diaphragm cloth contains oxygen-containing hydrophilic groups, and the content of oxygen element is 25 wt%. The oxygen-containing hydrophilic groups include carbonyl groups (C=O) and hydroxyl groups (-OH), and the total content of the oxygen-containing hydrophilic groups takes up 48% of the total content of surface groups of the fabric. The physical properties of the diaphragm cloth for a water electrolyzer in Reference Example 8 are shown in Table 1.

Comparative example 1

Warps and wefts are both woven with 20s/6 polyphenylene sulfide yarns to obtain plain cloth with a warp density of 1.42 yarns/mm (36 yarns/inch) and a weft density of 0.87 yarns/mm (22 yarns/inch). After weaving, the plain cloth is refined, dried and shaped to finally obtain diaphragm cloth for a water electrolyzer with a cover factor of 2441.17 and an average pore size of 12 $\mu$m, wherein the breaking strength of the diaphragm cloth is 3800 N/5cm and 2120 N/5cm in warp and weft directions, respectively.

The prepared diaphragm cloth is tested by an X-ray photoelectron spectroscopy. It is measured that the content of oxygen element on the polyphenylene sulfide fiber surface is 2 wt%. The physical properties of this diaphragm cloth for a water electrolyzer are shown in Table 1.

Comparative example 2

Warps and wefts are both woven with 20s/4 polyphenylene sulfide yarns to obtain plain cloth with a warp density of 1.65 yarns/mm (42 yarns/inch) and a weft density of 0.94 yarns/mm (24 yarns/inch). After weaving, the plain cloth is refined, dried and shaped to finally obtain diaphragm cloth for a water electrolyzer with a cover factor of 2268.13 and an average pore size of 15 $\mu$m, wherein the breaking strength of the diaphragm cloth is 2100 N/5cm and 1980 N/5cm in warp and weft directions, respectively.

The prepared diaphragm cloth is tested by an X-ray photoelectron spectroscopy. It is measured that the content of oxygen element in the polyphenylene sulfide fiber surface is 4 wt%. The physical properties of this diaphragm cloth for a water electrolyzer are shown in Table 1.

Comparative example 3

Polyphenylene sulfide fiber with a fineness of 2.2 dtex and a length of 51 mm are successively subjected to opening, mixing, carding, web-forming and needle-punched to form non-woven cloth, and then the non-woven cloth is sulfonated in 98% $H_2SO_4$ at 80°C for 30 min and then treated with 30% KOH solution. Finally, diaphragm cloth for a water electrolyzer with an average pore size of 13 $\mu$m is obtained, wherein the breaking strength of the diaphragm cloth is 1180 N/5cm and 1500 N/5cm in warp and weft directions, respectively.

The prepared diaphragm cloth is tested by an X-ray photoelectron spectroscopy. It is measured that the polytetrafluoroethylene fiber surface of the diaphragm cloth contains oxygen-containing hydrophilic groups, and the content of oxygen element on the polytetrafluoroethylene fiber surface is 12 wt%. The physical properties of the water electrolyzer are shown in Table 1.

Table 1

| Item | | example 1 | example 2 | example 3 | reference example 4 | example 5 | reference example 6 | reference example 7 | reference example 8 | comparative example 1 | comparative example 2 | comparative example 3 |
|---|---|---|---|---|---|---|---|---|---|---|---|---|
| Content of modified cross-section fiber (%) | | 0 | 0 | 20 | 50 | 80 | 0 | - | - | 0 | 0 | 0 |
| Type of modified cross-section fiber | | - | - | Crossed | Hexagonal | Hexagonal | - | - | - | - | - | - |
| Form of fabric | | Woven fabric | Woven fabric | Woven fabric | Knitted fabric | Woven fabric | Woven fabric | Non-woven cloth | Non-woven cloth | Woven fabric | Woven fabric | Non-woven cloth |
| Thickness (mm) | | 1.0 | 0.8 | 0.8 | 1.2 | 1.4 | 0.5 | 0.09 | 0.11 | 0.9 | 0.8 | 1.5 |
| Weight (g/m$^2$) | | 568 | 426 | 455 | 400 | 1130 | 275 | 83 | 106 | 498 | 419 | 500 |
| Density | Warp direction (yarns /inch*) | 39 | 47 | 39 | 89 | 56 | 76 | - | - | 36 | 42 | - |
| | Weft direction (yarns /inch*) | 27 | 32 | 28 | 63 | 40 | 62 | - | - | 22 | 24 | - |
| Cover factor | | 2777.89 | 2705.82 | 2658.70 | 1.3 | - | 2895 | - | - | 2441.17 | 2268.13 | - |
| (volume density) (g/cm$^3$) | | - | - | - | - | - | - | 0.94 | 0.96 | - | - | 0.33 |
| Average pore sizes ($\mu$m) | | 3 | 4 | 5 | 7 | 8 | 5 | 8 | 4 | 12 | 15 | 13 |
| Gas-tightness (mmH$_2$O) | | 300 | 370 | 380 | 240 | 320 | 350 | 370 | 480 | 200 | 130 | 180 |
| Venting quality (L/cm$^2$/min) | | 0.68 | 0. 79 | 1.06 | 1.59 | 1.89 | 1.05 | 0.82 | 0.33 | 2.68 | 2.98 | 2.43 |

(continued)

| Item | | example 1 | example 2 | example 3 | reference example 4 | example 5 | reference example 6 | reference example 7 | reference example 8 | comparative example 1 | comparative example 2 | comparative example 3 |
|---|---|---|---|---|---|---|---|---|---|---|---|---|
| Stiffness | Warp direction (N) | 27.3 | 5.6 | 5.0 | 3.3 | 38.6 | 2.2 | 2.6 | 3.4 | 24.5 | 4.8 | 21.5 |
| * yarns / 25.5mm | | | | | | | | | | | | |

## EP 2 947 709 B1

**Claims**

1. A diaphragm cloth for a water electrolyzer, **characterized in that** the diaphragm cloth is a plain cloth or knitted fabric composed of alkali-resistant fiber at a common use temperature of no less than 150°C; the average pore size of the diaphragm cloth is no less than $3\mu m$ to less than 10 $\mu m$; and under the condition of pressure of 3 kPa at 23°C and 50% RH, the venting quality of the diaphragm cloth is 2 L/cm$^2$/min or less, and the common use temperature is a temperature at which the strength of the fiber is reduced by half after exposure for 100,000 hours; wherein said alkali-resistant fiber is polyphenylene sulfide fiber containing hydrophilic groups on its surface, and wherein pores with a pore size of 0.2-10 $\mu m$ in the diaphragm cloth take up no less than 60% of all pores, and the content of oxygen element on the fiber surface is 12-40 wt%; and wherein the cover factor of the diaphragm cloth is from 2300 to 3000 if it is a plain cloth and from 0.7 to 1.5 if it is a knitted fabric.

2. The diaphragm cloth for a water electrolyzer according to claim 1, wherein said described hydrophilic groups are at least one of carboxyl groups, carbonyl groups, hydroxyl groups and formyl groups, and the total content of the hydrophilic groups takes up 10-60% of the total content of the groups on the fabric surface.

3. The diaphragm cloth for a water electrolyzer according to any preceding claim, wherein the polyphenylene sulfide fiber contains no less than 20 wt% of modified cross-section polyphenylene sulfide fiber.

4. The diaphragm cloth for a water electrolyzer according to claim 3, wherein said modified cross-section polyphenylene sulfide fiber is crossed, latticed, polygonal, leaf-shaped, elliptic or flat cross-section polyphenylene sulfide fiber.

5. The diaphragm cloth for a water electrolyzer according to any of claims 1 to 4, wherein said knitted fabric is warp-knitted fabric.

6. A manufacturing method of the diaphragm cloth for a water electrolyzer as claimed in any preceding claim, comprising the following steps of: weaving or knitting with alkali-resistant fiber at a common use temperature of no less than 150°C to obtain high-temperature-resistant and alkali-resistant woven fabric or knitted fabric, refining and drying the woven fabric or knitted fabric after weaving, and then subjecting the surface of the obtained woven fabric or knitted fabric to discharge modification by plasma treatment, at a treatment intensity of 50-500 kW·s/ m$^2$, or electric ironing treatment; wherein the content of oxygen element on the fiber surface is 12-40 wt%; and wherein the cover factor of the diaphragm cloth is from 2300 to 3000 if it is a plain cloth and from 0.7 to 1.5 if it is a knitted fabric.

**Patentansprüche**

1. Membrantuch für eine Wasserelektrolysevorrichtung, **dadurch gekennzeichnet, dass** das Membrantuch ein glattes Tuch oder ein gestrickter Stoff ist, der aus Alkali-resistenter Faser bei einer allgemeinen Verwendungstemperatur von nicht weniger als 150 °C zusammengesetzt ist; die mittlere Porengröße des Membrantuchs nicht weniger als 3 $\mu m$ bis weniger als 10 $\mu m$ beträgt; und die Belüftungsqualität des Membrantuchs unter der Bedingung des Drucks von 3 kPa bei 23 °C und 50 % rF 2 l/cm$^2$/min oder weniger beträgt und die allgemeine Verwendungstemperatur eine Temperatur ist, bei der die Festigkeit der Faser nach 100.000 Stunden Exponierung um die Hälfte reduziert ist; wobei die Alkali-resistente Faser eine Polyphenylensulfidfaser ist, die auf ihrer Oberfläche hydrophile Gruppen enthält, und wobei Poren mit einer Porengröße von 0,2 bis 10 $\mu m$ in dem Membrantuch nicht weniger als 60 % aller Poren ausmachen und wobei der Sauerstoffgehalt auf der Faseroberfläche 12 bis 40 Gew.-% beträgt; und wobei der Abdeckfaktor des Membrantuchs 2300 bis 3000 beträgt, wenn es ein glattes Tuch ist, und 0,7 bis 1,5 beträgt, wenn es ein gestrickter Stoff ist.

2. Membrantuch für eine Wasserelektrolysevorrichtung nach Anspruch 1, wobei die beschriebenen hydrophilen Gruppen zumindest eine aus Carboxylgruppen, Carbonylgruppen, Hydroxylgruppen und Formylgruppen sind und der Gesamtgehalt der hydrophilen Gruppen 10 bis 60 % des Gesamtgehalts der Gruppen auf der Faseroberfläche ausmacht.

3. Membrantuch für eine Wasserelektrolysevorrichtung nach einem der vorangegangenen Ansprüche, wobei die Polyphenylensulfidfaser nicht weniger als 20 Gew.-% der Polyphenylensulfidfaser mit modifiziertem Querschnitt enthält.

4. Membrantuch für eine Wasserelektrolysevorrichtung nach Anspruch 3, wobei die Polyphenylensulfidfaser mit modifiziertem Querschnitt eine Polyphenylensulfidfaser mit gekreuztem, gitterförmigem, polygonalem, blattförmigem, elliptischem oder flachem Querschnitt ist.

5. Membrantuch für eine Wasserelektrolysevorrichtung nach einem der Ansprüche 1 bis 4, wobei die gestrickte Faser ein Kettengewirke ist.

6. Verfahren zur Herstellung des Membrantuchs für eine Wasserelektrolysevorrichtung, wie in einem der vorangegangenen Ansprüche beansprucht, das die folgenden Schritte umfasst: Weben oder Stricken mit Alkali-resistenter Faser bei einer allgemeinen Verwendungstemperatur von nicht weniger als 150 °C, um einen gegen hohe Temperatur resistenten und Alkali-resistenten gewobenen Stoff oder gestrickten Stoff zu erhalten, Verfeinern und Trocknen des gewobenen Stoffs oder des gestrickten Stoffs nach dem Weben und dann Unterziehen der Oberfläche des erhaltenen gewobenen Stoffs oder gestrickten Stoffs einer Entladungsmodifikation durch Plasmabehandlung bei einer Behandlungsintensität von 50 bis 500 kW·s/m$^2$ oder durch eine Elektrobügelbehandlung;
wobei der Sauerstoffgehalt der Faseroberfläche 12 bis 40 Gew.-% beträgt;
und wobei der Abdeckfaktor des Membrantuchs 2300 bis 3000 beträgt, wenn es ein glattes Tuch ist, und 0,7 bis 1,5, wenn es ein gestrickter Stoff ist.

## Revendications

1. Toile de diaphragme pour électrolyseur d'eau, **caractérisée en ce que** la toile de diaphragme est une toile unie ou un tissu tricoté composé d'une fibre résistant aux alcalis à une température d'utilisation courante de pas moins de 150°C ; la taille moyenne des pores de la toile de diaphragme comprise entre pas moins de 3 μm et moins de 10 μm ; et dans des conditions de pression de 3 kPa à 23°C et 50 % HR, la qualité de ventilation de la toile de diaphragme est de 2 L/cm$^2$/min ou moins, et la température d'utilisation courante est une température à laquelle la résistance de la fibre est réduite de moitié après une exposition pendant 100 000 heures ;
dans laquelle ladite fibre résistant aux alcalis est une fibre de polysulfure de phénylène contenant des groupes hydrophiles sur sa surface, et dans laquelle les pores ayant une taille de pores de 0,2 à 10 μm dans la toile de diaphragme ne constituent pas moins de 60 % de tous les pores, et la teneur en élément oxygène sur la surface de fibre est de 12 à 40 % en poids ; et
dans laquelle le facteur de recouvrement de la toile de diaphragme est compris entre 2 300 et 3 000 s'il s'agit d'une toile unie et entre 0,7 et 1,5 s'il s'agit d'un tissu tricoté.

2. Toile de diaphragme pour électrolyseur d'eau selon la revendication 1, dans laquelle lesdits groupes hydrophiles décrits sont au moins l'un parmi les groupes carboxyle, des groupes carbonyle, des groupes hydroxyle et des groupes formyle, et la teneur totale en groupes hydrophiles constitue de 10 à 60 % de la teneur totale des groupes sur la surface de tissu.

3. Toile de diaphragme pour électrolyseur d'eau selon l'une quelconque des revendications précédentes, dans laquelle la fibre de polysulfure de phénylène ne contient pas moins de 20 % en poids de fibre de polysulfure de phénylène à coupe transversale modifiée.

4. Toile de diaphragme pour électrolyseur d'eau selon la revendication 3, dans laquelle ladite fibre de polysulfure de phénylène à coupe transversale modifiée est une fibre de polysulfure de phénylène à coupe transversale croisée, quadrillée, polygonale, en forme de feuille, elliptique ou plate.

5. Toile de diaphragme pour électrolyseur d'eau selon l'une quelconque des revendications 1 à 4, dans laquelle ledit tissu tricoté est un tissu tricoté sur chaîne.

6. Procédé de fabrication de la toile de diaphragme pour un électrolyseur d'eau selon l'une quelconque des revendications précédentes, comprenant les étapes suivantes consistant à : tisser ou tricoter avec une fibre résistant aux alcalis à une température d'utilisation courante de pas moins de 150°C pour obtenir un tissu tissé ou un tissu tricoté résistant à des températures élevées et résistant aux alcalis, ajuster et sécher le tissu tissé ou le tissu tricoté après le tissage, puis soumettre la surface du tissu tissé ou du tissu tricoté obtenu à une modification de décharge par traitement au plasma, à une intensité de traitement de 50 à 500 kW.s/m$^2$, ou traitement de repassage électrique ;
dans lequel la teneur en élément oxygène sur la surface de fibre est comprise entre 12 et 40 % en poids ;
et dans lequel le facteur de recouvrement de la toile de diaphragme est compris entre 2 300 et 3 000 s'il s'agit d'une toile unie et entre 0,7 et 1,5 s'il s'agit d'un tissu tricoté.

**EP 2 947 709 B1**

**REFERENCES CITED IN THE DESCRIPTION**

**Patent documents cited in the description**

- CN 101372752 A
- CN 101195944 A
- EP 0814897 A
- GB 2091166 A
- EP 0252604 A

- US 4359082 A
- EP 0571953 A
- WO 2010080127 A
- GB 2165512008 T